# FASCICULE DE BREVET EUROPEEN

(11) **EP 3 197 693 B1**
(45) Date de publication et mention de la délivrance du brevet: **31.10.2018**
(21) Numéro de dépôt: 15766832.8
(22) Date de dépôt: 22.09.2015
(51) Int. Cl.: F16F 9/54, B62D 7/18, B60G 7/02, B60G 13/00

(54) **JAMBE DE FORCE EN MATERIAU COMPOSITE POUR SUSPENSION DE TRAIN AVANT DE VEHICULE**
STÜTZSTANGE AUS VERBUNDWERKSTOFF FÜR DIE VORDERE AUFHÄNGUNG EINES FAHRZEUGS
STRUT ROD MADE OF A COMPOSITE MATERIAL FOR THE FRONT END SUSPENSION OF A VEHICLE

(30) Priorité: 24.09.2014 FR 1458989
(43) Date de publication de la demande: 02.08.2017
(73) Titulaire: PSA Automobiles SA, 78300 Poissy (FR); KYB Corporation, Tokyo 105-6111 (JP)
(72) Inventeur: ALLEGRE, Jean Marc, F-91470 Limours (FR); HERNETTE, Vincent, F-75014 Paris (FR)
(74) Mandataire: Rosenberg, Muriel Sylvie
(86) Numéro de dépôt international: PCT/EP2015/071682
(87) Numéro de publication internationale: WO 2016/046181

(56) Documents cités:
- WO-A1-2014/128131

## Description

La présente invention concerne une jambe de force en matériau composite pour suspension de train avant de véhicule. Elle concerne également un véhicule, en particulier un véhicule automobile, qui comporte au moins une telle jambe de force en matériau composite dans la suspension de son train avant.

De façon classique, différents dispositifs de suspension ou d'amortissement de véhicule comprennent une jambe de force qui est couplée, d'une part, à un pivot de l'une des roues du train avant du véhicule, et d'autre part, à un ensemble mécanique d'amortissement formé d'une tige et d'un piston, lequel ensemble est également fixé à la caisse du véhicule.

Lorsqu'elle est en matériau composite, la jambe de force peut être réalisée en une seule opération et permettre, par rapport aux jambes de forces métalliques, un gain de masse relativement important. Par l'expression « matériau composite », on entend, de manière classique, un assemblage intime d'au moins deux composants dont les propriétés se complètent et qui se compose au moins d'une matrice et d'un renfort.

On connaît, selon le document WO 2014/128131 un dispositif d'amortissement pour un train avant de véhicule. Il comprend une jambe de force, laquelle comporte, d'une part, une partie interne métallique et munie d'une première extrémité supérieure et d'une extrémité inférieure, et d'autre part, une partie externe surmoulée sur ladite partie interne hormis, au moins, sur ladite première extrémité supérieure. Cette partie externe surmoulée est réalisée dans un matériau composite et comporte une seconde extrémité supérieure, sur laquelle est rabattue ladite première extrémité supérieure, une partie intermédiaire, qui comprend une coupelle définissant une surface d'appui pour un ressort de suspension, et une seconde extrémité inférieure, qui entoure ladite première extrémité inférieure et qui comprend deux ailes sensiblement parallèles, ces deux ailes étant propres à être solidarisées à un pivot de roue du train avant. De plus, la partie interne métallique comprend une première protubérance, qui est située en dessous de sa première extrémité supérieure, et une seconde protubérance, qui est située au dessus de sa première extrémité inférieure.

Toutefois, contrairement aux jambes de force métalliques qui plient lors de chocs accidentels et informent, ainsi, par le simple constat visuel de la déformation, la nécessité de changer la pièce, les jambes de force en matériau composite peuvent, lors de chocs accidentels équivalents, ne présenter aucune dégradation apparente, ce qui a pour conséquence préjudiciable de laisser insoupçonné un risque sécuritaire très réel pour les passagers du véhicule.

Le but de la présente invention est de fournir une jambe de force en matériau composite, qui obvie à l'inconvénient cité ci-dessus, c'est-à-dire dans laquelle est prévu un moyen sûr et simple de détection d'une éventuelle petite fissure ou amorce de rupture sur la jambe de force,

Un autre but de la présente invention est de fournir une telle jambe de force, qui soit de conception et de réalisation simples, qui soit robuste, fiable et économique.

Pour parvenir à ces buts, la présente invention a pour objet une jambe de force en matériau composite pour suspension de train avant de véhicule, qui comprend une partie supérieure couplée avec un ensemble tige et piston solidarisé à la caisse du véhicule, et une partie inférieure en forme de chape à deux ailes pour la fixation d'un pivot de roue du véhicule. Cette jambe de force en matériau composite, nouvelle, comporte un moyen de détection d'une amorce de rupture ou fissure. Ce moyen de détection est constitué par au moins une arête additionnelle située en saillie de la surface externe de ladite partie inférieure en forme de chape de la jambe de force, dans une zone de fissure possible en cas de choc accidentel sur la roue du véhicule.

De préférence, cette arête additionnelle au moins est dirigée selon une direction sensiblement perpendiculaire à la direction privilégiée de fissure sous l'impact dudit choc accidentel.

Selon un mode préféré de réalisation de l'invention, cette arête additionnelle au moins est située en saillie de la surface frontale d'extrémité de l'une desdites deux ailes formant la chape de fixation de pivot de roue, ladite arête additionnelle se fissurant en cas de choc accidentel sur la roue du véhicule et cette fissure, visible, informant, par sa présence, l'opérateur technique de la nécessité de remplacer la jambe de force.

Selon un mode préféré de réalisation de l'invention également, la surface frontale d'extrémité de chaque aile de la chape de fixation est curviligne et formée de deux secteurs en arc de cercle adjacents reliés par un secteur de cercle intermédiaire, et l'arête additionnelle est située sur le secteur inférieur en arc de cercle.

De manière préférentielle, l'arête additionnelle au moins est réalisée « monobloc » avec l'aile de la chape de fixation sur laquelle elle est située, par une opération connue en soi de moulage, par conséquent lors de l'opération de moulage de la jambe de force. Il suffit, par conséquent, de modifier très légèrement le moule de la jambe de force pour obtenir cette arête additionnelle, dont la présence fonde la présente invention.

La présente invention a aussi pour objet un véhicule, en particulier un véhicule automobile, qui présente un train avant qui comprend un dispositif de suspension du type à jambe de force en matériau composite, dans lequel la jambe de force est conforme à celle décrite ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, de la partie inférieure d'une jambe de force en matériau composite selon l'art antérieur, ladite jambe de force étant destinée à un dispositif d'amortissement monté sur un train avant de véhicule automobile,
- la figure 2 est une vue en perspective, schématique, de la partie inférieure d'une jambe de force en matériau composite selon la présente invention, ladite jambe de force étant également destinée à un dispositif d'amortissement monté sur un train avant de véhicule automobile, et
- la figure 3 illustre le fonctionnement de la présente invention, à savoir la partie de la jambe de force incorporant l'arête additionnelle de la figure 2 après un choc accidentel.

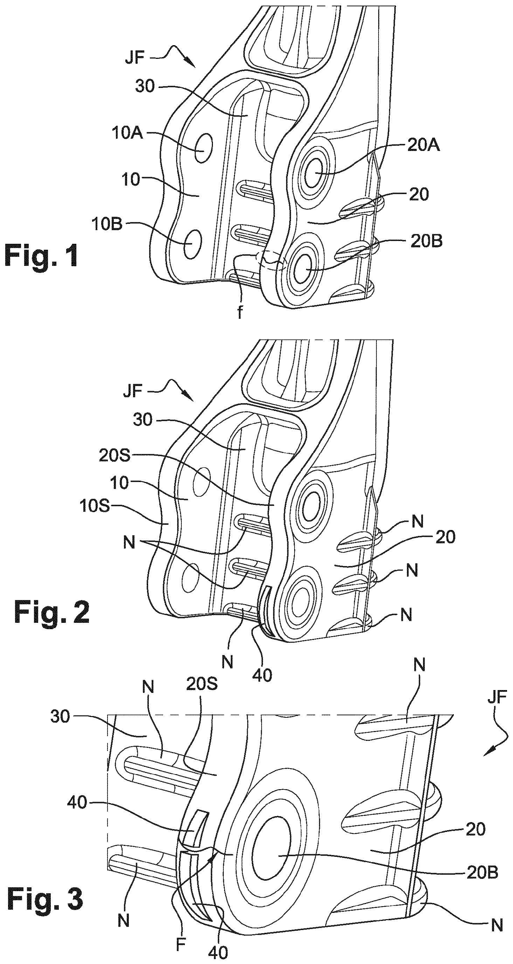

En référence au dessin de la figure 1, on a représenté, de manière partielle, un exemple de réalisation d'une jambe de force de dispositif d'amortissement de train avant de véhicule automobile connue de l'art antérieur. Cette jambe de force, désignée par la référence générale JF, est réalisée « monobloc » en un matériau composite. La partie supérieure de la jambe de force, non représentée, comprend, de manière classique, une coupelle servant de surface d'appui pour les spires inférieures d'un ressort de suspension à l'intérieur duquel est logé l'ensemble tige et piston d'amortissement. La partie inférieure, représentée sur les dessins, présente la forme d'une chape qui comprend deux ailes désignées par les références numériques 10 et 20, respectivement, et une partie centrale ou « fond » de chape, qui est désigné par la référence 30 et qui relie le deux ailes 10 et 20. Les deux ailes 10 et 20 sont sensiblement parallèles et propres à être solidarisées à un pivot de roue (non représenté) du train avant du véhicule. En son centre, le pivot de roue comprend le moyeu de roue et supporte l'étrier de frein. A sa base le pivot de roue relie le triangle de suspension par l'intermédiaire d'une rotule et comporte un levier horizontal relié à la biellette de direction.

Il importe de noter que le pivot de roue comporte une patte de fixation, relativement épaisse, destinée à être placée entre les deux ailes 10 et 20. La solidarisation du pivot de roue sur la chape se fait grâce aux orifices traversants cylindriques 10A, 10B, respectivement 20A, 20B, qui sont réalisés dans l'aile 10, respectivement l'aile 20, et à deux vis dont les corps sont destinés à traverser tous ces orifices traversants 10A, 10B, 20A, 20B.

Des nervures de rigidification sont désignées collectivement par la référence littérale N (figures 2 et 3) et rigidifient les deux ailes 10 et 20, ainsi que la partie centrale 30 de la chape.

En référence au dessin de la figure 2, les ailes 10 et 20 présentent des surfaces frontales d'extrémité ou « surfaces d'épaisseur» désignées respectivement 10S et 20S, qui sont de largeur égale à l'épaisseur de l'aile et qui sont curvilignes pour « épouser » la forme en double arc de cercle due au contour des orifices 10A, 10B, 20A, 20B mentionnés précédemment.

Comme illustré sur le dessin de la figure 1, la conséquence d'un choc accidentel sur la roue du véhicule peut-être une fissuration au niveau d'une aile de la chape, fissuration schématiquement représentée sur l'aile 20 et désignée par la référence « f ». Le fait d'avoir une telle fissure « f » sur une pièce mécanique comme la jambe de force peut avoir pour conséquence une « délamination » du matériau composite, ce qui peut provoquer à terme une détérioration du maintien du plan de roue, voire la désolidarisation de la jambe de force du pivot de roue avec un risque sécuritaire élevé pour les passagers du véhicule.

Si la fissure « f » est petite, l'opérateur technique chargé de remonter le dispositif d'amortissement sur le véhicule risque de ne pas la voir et de procéder au remontage de la jambe de force défectueuse sur le véhicule.

Selon le principe même de la présente invention, il est prévu un moyen de détection de la fissure ou amorce de rupture, si petite soit-elle. Ce moyen de détection, représenté sur le dessin de la figure 2, est constitué par une arête additionnelle de référence 40 située en saillie de la surface frontale d'extrémité 20S de l'une desdites deux ailes de la chape. A titre d'exemple et d'exemple seulement, on a représenté cette arête additionnelle 40 sur l'aile 20 de la chape de fixation de pivot de roue, plus précisément en extension de la surface frontale d'extrémité 20S de l'aile 20.

Comme représenté sur le dessin de la figure 3, en cas de choc accidentel, cette arête additionnelle 40 se fissure et l'existence de cette fissure, qui est représentée et désignée « F » sur la figure 3, informe l'opérateur technique de la nécessité de remplacer la jambe de force.

Cette arête additionnelle 40 est réalisée en modifiant très légèrement le moule de fabrication de la jambe de force JF.

Il va de soi que la jambe de force en matériau composite décrite ci-dessus est donnée à titre d'exemple non limitatif de l'objet et de la portée de la présente invention. On notera que, bien que l'exemple décrit ci-dessus comporte une seule arête additionnelle, des variantes de réalisation de la jambe de force selon l'invention peuvent comporter plusieurs arêtes additionnelles dans plusieurs zones de rupture possibles. On notera également que la présente invention peut s'appliquer *mutatis mutandis* à une pièce mécanique différente d'une jambe de force, par exemple à un triangle de suspension en matériau composite pour train de véhicule automobile.

La jambe de force en matériau composite selon l'invention décrite ci-dessus présente de nombreux avantages, parmi lesquels les avantages suivants :
- elle comporte un moyen de détection visible et fiable de fissure ou d'amorce de rupture, ce qui a pour résultat de renforcer considérablement la sécurité des passagers du véhicule, en évitant ainsi de maintenir une pièce défectueuse lors de l'examen par un opérateur technique,
- elle est de conception et de fabrication simples, ne nécessitant qu'une très simple modification du moule utilisé pour l'opération unique de moulage de la jambe de force, et
- elle est robuste, fiable et économique.

## Revendications

1. Jambe de force en matériau composite pour suspension de train avant de véhicule, qui comprend une partie supérieure couplée avec un ensemble tige et piston solidarisé à la caisse du véhicule, et une partie inférieure en forme de chape à deux ailes (10, 20) pour la fixation d'un pivot de roue du véhicule, ladite jambe de force étant **caractérisée en ce qu'**elle comporte un moyen de détection d'une fissure, ledit moyen de détection étant constitué par au moins une arête additionnelle (40) située en saillie de la surface externe de ladite partie inférieure en forme de chape de la jambe de force, dans une zone de fissure possible en cas de choc accidentel sur la roue du véhicule.

2. Jambe de force selon la revendication 1, **caractérisée en ce que** ladite arête additionnelle (40) au moins est dirigée selon une direction sensiblement perpendiculaire à la direction privilégiée de fissure sous l'impact dudit choc accidentel.

3. Jambe de force selon l'une quelconque des revendications 1 et 2, **caractérisée en ce que** ladite arête additionnelle (40) au moins est située en saillie de la surface frontale d'extrémité (20S) de l'une (20) desdites deux ailes (10 ; 20) formant ladite chape de fixation de pivot de roue, ladite arête additionnelle (40) se fissurant en cas de choc accidentel sur la roue du véhicule et cette fissure (« F ») informant, par sa présence, l'opérateur technique de la nécessité de remplacer la jambe de force.

4. Jambe de force selon l'une quelconque des revendications 1 à 3, **caractérisée en ce que** ladite surface frontale d'extrémité (10S ; 20S) de chaque aile (10 ; 20) de la chape de fixation est curviligne et formée de deux secteurs en arc de cercle adjacents reliés par un secteur de cercle intermédiaire **en ce que** ladite arête additionnelle (40) au moins est située sur le secteur inférieur en arc de cercle.

5. Jambe de force selon l'une quelconque des revendications 1 à 4, **caractérisée en ce que** ladite arête additionnelle (40) au moins est réalisée « monobloc » avec l'aile (10 ; 20) de la chape de fixation sur laquelle elle est située.

6. Jambe de force selon la revendication 5, **caractérisée en ce que** ladite arête additionnelle (40) est réalisée par moulage simultanément avec la jambe de force lors de l'opération de réalisation par moulage de ladite jambe de force.

7. Véhicule, en particulier véhicule automobile, **caractérisé en ce qu'**il présente un train avant qui comprend un dispositif de suspension du type à jambe de force en matériau composite, **caractérisé en ce que** ladite jambe de force en matériau composite est conforme à l'une quelconque des revendications précédentes.

## Patentansprüche

1. Stützstange aus Verbundwerkstoff für Fahrzeug-Vorderachsenaufhängung, die einen oberen Teil umfasst, der mit einer Baugruppe aus Schaft und Kolben gekoppelt ist, die fest mit der Karosserie des Fahrzeugs verbunden ist, und einen unteren Teil in Gabelform mit zwei Flügeln (10, 20) für die Befestigung eines Radzapfens des Fahrzeugs, Stützstange **dadurch gekennzeichnet, dass** sie ein Mittel zum Erfassen eines Risses umfasst, wobei das Erfassungsmittel aus mindestens einem zusätzlichen Steg (40) besteht, der von der äußeren Oberfläche des unteren Teils in Gabelform der Stützstange vorstehend in einer möglichen Risszone im Fall eines zufälligen Stoßes auf das Rad des Fahrzeugs liegt.

2. Stützstange nach Anspruch 1, **dadurch gekennzeichnet, dass** der zusätzliche Steg (40) mindestens entlang einer Richtung im Wesentlichen senkrecht zu der bevorzugten Rissrichtung bei Aufprall des zufälligen Stoßes ausgerichtet ist.

3. Stützstange nach einem der Ansprüche 1 und 2, **dadurch gekennzeichnet, dass** der zusätzliche Steg (40) mindestens von der frontalen Endoberfläche (20S) des einen (20) der zwei Flügel (10; 20), die die Befestigungsgabel des Radzapfens bilden, vorragend liegt, wobei der zusätzliche Steg (40) bei zufälligen Stoß auf das Rad des Fahrzeugs rissig wird, und dieser Riss ("F") durch seine Gegenwart den technischen Bediener über die Notwendigkeit informiert, die Stützstange zu ersetzen.

4. Stützstange nach einem der Ansprüche 1 bis 3, **dadurch gekennzeichnet, dass** die frontale Endoberfläche (10S; 20S) jedes Flügels (10; 20) der Befestigungsgabel kurvilinear und aus zwei benachbarten Kreisbogensektoren gebildet ist, die durch einen Zwischenkreissektor verbunden sind, dass der zusätzliche Steg (40) mindestens auf dem unteren Kreisbogensektor liegt.

5. Stützstange nach einem der Ansprüche 1 bis 4, **dadurch gekennzeichnet, dass** der zusätzliche Steg (40) mindestens "einstückig" mit dem Flügel (10; 20) der Befestigungsgabel, auf der er sich befindet, hergestellt ist.

6. Stützstange nach Anspruch 5, **dadurch gekennzeichnet, dass** der zusätzliche Steg (40) durch gleichzeitiges Formen mit der Stützstange bei dem Herstellungsvorgang durch Formen der Stützstange hergestellt wird.

7. Fahrzeug, insbesondere Kraftfahrzeug, **dadurch gekennzeichnet, dass** es eine Vorderachse aufweist, die eine Aufhängungsvorrichtung des Typs Stützstange aus Verbundwerkstoff umfasst, **dadurch gekennzeichnet, dass** die Stützstange aus Verbundwerkstoff einem der vorhergehenden Ansprüche entspricht.

## Claims

1. A strut rod made of a composite material for the front end suspension of a vehicle, comprising an upper part coupled to a rod and piston assembly secured to the body of the vehicle, and a lower part in the form of a double-flanged yoke (10, 20) for attaching a wheel pivot of the vehicle, said strut rod being **characterized in that** it comprises a means for detecting a crack, said detection means being constituted by at least one additional edge (40) situated protruding form the outer surface of said lower part in the form of the yoke of the strut rod, in a possible crack zone in the event of accidental impact on the wheel of the vehicle.

2. The strut rod according to Claim 1, **characterized in that** said additional edge (40) at least is directed along a direction substantially perpendicular to the preferred crack direction under the impact of said accidental impact.

3. The strut rod according to any one of Claims 1 and 2, **characterized in that** said additional edge (40) at least is situated protruding from the frontal end surface (20S) of one (20) of said two flanges (10; 20) forming said wheel pivot attachment yoke, said additional edge (40) cracking in the event of accidental impact on the wheel of the vehicle and this crack ("F") informing the technical operator, by its presence, of the need to replace the strut rod.

4. The strut rod according to any one of Claims 1 to 3, **characterized in that** said frontal end surface (10S; 20S) of each flange (10; 20) of the attachment yoke is curvilinear and is formed by two adjacent circular-arc sectors connected by an intermediate circular sector, **in that** said additional edge (40) at least is situated on the lower circular-arc sector.

5. The strut rod according to any one of Claims 1 to 4, **characterized in that** said additional edge (40) at least is produced "in a single piece" with the flange (10; 20) of the attachment yoke on which it is situated.

6. The strut rod according to Claim 5, **characterized in that** said additional edge (40) is produced by casting simultaneously with the strut rod during the operation of producing said strut rod by casting.

7. A vehicle, in particular a motor vehicle, **characterized in that** it has a front end which includes a suspension device of the strut rod type, made of a composite material, **characterized in that** said strut rod made of a composite material is in accordance with any one of the preceding claims.
